# FASCICULE DE BREVET EUROPEEN

(11) **EP 0 413 071 B1**
(45) Date de publication et mention de la délivrance du brevet: **02.03.1994**
(21) Numéro de dépôt: 89402302.7
(22) Date de dépôt: 17.08.1989
(51) Int. Cl.: A23L 1/212, A23B 7/02

(54) **Procédé pour la préparation de fruits et légumes entiers ou en tranches à humidité réduite**
Verfahren für die Zubereitung von Früchten oder Gemüse, ganz oder in Scheiben, mit reduziertem Feuchtigkeitsgehalt
Process for the preparation of fruits or vegetables, entire or in slices, by reduced humidity

(43) Date de publication de la demande: 20.02.1991
(73) Titulaire: S.A. EUROCOLOR, 28240 Fontaine-Simon (FR)
(72) Inventeur: Noel, Alain, F-28240 Fontaine-Simon (FR)
(74) Mandataire: Gouvernal, Serge Lionel

(56) Documents cités:
- EP-A- 0 284 042
- DE-B- 1 165 981
- US-A- 4 547 376
- PATENT ABSTRACTS OF JAPAN, vol. 5, no. 184(C-80)(856), 21 novembre 1981; & JP-A-56109546 (House Shiyokuhin Kogyo K.K.) 31.08.1981

## Description

L'invention a pour objet un procédé pour la préparation de fruits et de légumes entiers, ou en morceaux, ou en tranches, d'une épaisseur de 1 à 10 mm par une réduction de leur teneur en humidité à une valeur comprise entre 2 et 5 % en poids par rapport au poids total, en vue de leur conservation pour une consommation ultérieure.

Le procédé de l'invention est utilisable avec conservation du sucre quand le fruit traité en contient initialement ou avec adjonction de sucre, ou encore avec extraction partielle du sucre contenu initialement.

Des procédés divers sont déjà connus pour la fabrication de tranches de fruits ou de légumes qui sont déshydratés pour permettre leur conservation ou qui sont déshydratés de manière plus prononcée jusqu'à une humidité résiduelle comprise entre 2 et 3 %. Avec une humidité aussi faible, les tranches obtenues sont croustillantes, craquantes sous la dent, et sont particulièrement appréciées des consommateurs.

Par exemple, le document US-A-4 547 376 décrit un procédé applicable aux fruits et légumes coupés en tranches de 1 à 1,5 mm d'épaisseur. Ces tranches reçoivent une pulvérisation d'une solution aqueuse de sucre (3 % à 10 %), d'acide citrique (0,75 à 1,50 %) et de métabisulfite de sodium (0,1 %). Ensuite, les tranches sont déshydratées par passage dans un four à une température de 115 à 175°C, pendant une durée de 10 à 15 minutes, à la pression atmosphérique.

Ce procédé prévoit l'emploi de métabisulfite de sodium pour empêcher le brunissement des tranches pendant leur déshydratation sous l'effet de la chaleur. Comme agent anti-brunissant, sont cités aussi le bisulfite de potassium, le sulfite de sodium ou de potassium, le métabisulfite de potassium, l'acide érythorbique, qui peuvent être utilisés pour empêcher le brunissement.

Le document US-A-4 514 428 décrit un procédé applicable aux pommes ou aux pommes de terre coupées en tranches d'une épaisseur de 1,65 mm. Après tranchage, les tranches sont trempées dans une solution à 1 % en bisulfite pendant une durée de 15 secondes ; ensuite, elles sont plongées dans une solution aqueuse à 32 % de sucrose à 52°C, pendant 5 minutes, après quoi elles sont exposées dans un four à air chaud à une température de 143°C pendant 10 minutes, puis de 121°C pendant 10 minutes. Après refroidissement, ces tranches sont croustillantes.

Selon ce document, l'emploi d'un agent antibrunissant est toutefois inévitable. Ainsi, selon l'état de la technique, la déshydratation des fruits ou légumes traités se fait à une température supérieure à 100°C et pour empêcher le brunissement qui en résulte, il est obligatoire de se servir d'un agent anti-brunissant à base de soufre. En outre, de nombreux fruits ne supportent pas une température aussi élevée.
L'Etat de la technique révélé a fait ressortir l'existence des documents suivants :
- Document 1 :: "Patent Abstracts of Japan", vol . 5, n° 184, (C-80) (856, 21 novembre 1981 ;
- Document 2 :: EP - A -0 284 042 (HOUSE FOOD INDUTRIAL Co. Ltd).

Le premier document décrit un procédé de préparation de fruits secs en morceaux (morceaux de pomme, etc...) d'un goût agréable, par traitement du fruit à l'aide d'une solution de sucre, lyphilisation, séchage par micro-ondes (30 torr et 30°C), et séchage sous vide (10 - 30 torr et température inférieure ou égale à 50°C) jusqu'à 5 % d'humidité.

Ce procédé prévoit obligatoirement le traitement du fruit avec une solution de sucre, ainsi qu'une lyophilisation.

Le second document quant à lui décrit un procédé de préparation de fruits secs (pêche, melon, etc...) par traitement du fruit après découpage en tranches de 3 à 5 mm, conditionnement pendant 30 minutes jusqu'à l'obtention de la température de 21°C, expansion dans un séchoir sous vide (225 Pa pendant 5 à 6 minutes) et séchage par chauffage sous vide (23 Pa à 80°C pendant deux heures et demie) juqu'à 4,9 % d'humidité. Le produit ainsi obtenu a un goût agréable, il est frais, il est croustillant et il a les mêmes dimensions et aspect qu'avant le traitement.

L'invention a pour but principal d'apporter un procédé du même domaine que les procédés connus rappelés ci-dessus aboutissant à l'obtention de tranches de fruits ou de légumes croutillantes et croquantes, à humidité résiduelle comprise entre 2 et 5 %, mais évitant tout chauffage à température supérieure à 100°C, et supprimant totalement l'emploi d'un agent anti-brunissant quelconque, les tranches obtenues ayant néammoins conservé leur teinte naturelle, sans aucun brunissement.

Un autre but de l'invention est de parvenir à des tranches de fruits ou de légumes, telles que définies ci-dessus, ayant conservé, après l'application du procédé, non seulement leur teinte naturelle sans brunissement, mais aussi ayant pratiquement les mêmes dimensions qu'avant le traitement, sans gonflement ni applatissement notables, mais ayant en plus la texture et l'apparence caractéristique d'un produit croustillant.

Un but supplémentaire de l'invention est de procurer un procédé conduisant aux résultats mentionnés ci-dessus, et permettant en plus de modifier la teneur en hydrates de carbone du fruit ou du légume traité, soit par accroissement, soit par diminution de cette teneur.

Un but supplémentaire encore de l'invention est de parvenir à un procédé procurant les avantages mentionnés ci-dessus, mais applicable aussi, sans perte de ces avantages, à des tranches nettement plus épaisses, d'une épaisseur comprise entre 1 et 10 mm, que les tranches traitées par les procédés connus, et permettant même, si on le juge souhaitable, de traiter des fruits ou des légumes entiers ou en morceaux, sans perte des avantages apportés par le procédé.

L'application du procédé de l'invention à des fruits ou à des légumes coupés en morceaux ou tranches étant préférée et plus rapide, comme on le montrera plus loin, à son emploi avec des fruits ou des légumes entiers, on décrira d'abord le procédé appliqué à des tranches.

Pour fixer les idées, on se référera à l'exemple du traitement des pommes, sans intention limitative, pour la simple raison que la pomme est un fruit abondant, assez peu fragile, qui supporte particulièrement bien le traitement de l'invention.

Les pommes sont nettoyées, épluchées, débarrassées des pépins et coupées en tranches ayant une épaisseur comprise entre 1 et 10 mm, par exemple 3 mm.

Selon l'invention, un bain de modification de la teneur en sucre est préparé, chauffé à une température de 30° à 50°C, par exemple 40°C, et les tranches y sont plongées pendant une durée qui est à choisir entre 15 minutes (mn) et 40 minutes (mn). La durée dépend de la maturité du fruit traité, de l'épaisseur des tranches et, quand il ne s'agit pas d'une pomme, de la nature du fruit ou du légume.

Si l'on veut accroître la teneur en sucre des tranches traitées, on utilise un bain plus sucré que le fruit. On prépare alors le bain à l'aide d'eau, de préférence de l'eau douce, et d'un hydrate de carbone quelconque, par exemple du saccharose, ou du miel ; on peut aussi utiliser un jus de fruit plus sucré à l'état naturel que le fruit traité, par exemple un jus d'orange. Dans ce cas, le bain peut être constitué par le jus même à l'état concentré. L'emploi d'un jus de fruit permet d'élever la teneur en sucre du fruit traité et, simultanément, de l'aromatiser plus ou moins fortement en lui conférant une saveur supplémentaire qu'il n'a pas à l'état naturel.

A l'inverse, si on désire diminuer la teneur en sucre du fruit traité, on utilise comme bain uniquement de l'eau tiède dans laquelle se produit la diffusion du sucre contenu dans les tranches.

La durée du trempage des tranches dans le bain se détermine facilement par l'exécution de quelques essais simples. Il est avantageux, quand la quantité traitée est importante par rapport au volume du bain de tenir celui-ci en circulation ou en agitation.

Les appareils permettant l'exécution facile et correcte des opérations décrites ci-dessus existent dans le commerce et sont déjà utilisés, notamment pour la mise en oeuvre d'autres procédés, dans le domaine de la pharmacie ou des produits alimentaires.

A la fin de la durée de trempage, les tranches sont retirées du bain, elles ont une teneur en humidité comprise entre 80 et 85 %.

Les tranches sont alors disposées, à plat, en une seule couche, sans aucun chevauchement sur une surface favorable à l'égouttement, par exemple sur une toile à tamis en matière non corrodable.

Ensuite, les tranches sont soumises à une opération de déshydratation, cette opération étant exécutée dans un four chauffant et pouvant être vidé de son air. Ce four doit pouvoir être chauffé à une température de 35°C. La pression à l'intérieur du four doit pouvoir être abaissée jusqu'à une valeur résiduelle de l'ordre de 5 cm Hg (6,666 Pa).

Après leur mise en place à l'intérieur du four, sur la même surface que celle définie plus haut, sans aucun chevauchement des tranches, on crée à l'intérieur du four la dépression jusqu'à la valeur résiduelle indiquée et on chauffe le four jusqu'à la température à laquelle se produit l'ébullition de l'eau. Pour le jus plus ou moins sucré et chargé d'autres substances en dissolution, contenu dans les fruits ou légumes traités, cette température est généralement de 35°C.

Selon l'invention, la dépression à l'intérieur du four est tenue constante ou pratiquement constante) ; le contrôle de l'opération de déshydratation se fait en agissant sur la température qui est régulée pour être élevée jusqu'à la température indiquée d'ébullition de la phase liquide à la valeur de la dépression.

Le contrôle de la température se fait à l'aide d'un détecteur à aiguille disponible dans le commerce, dont l'aiguille est enfoncée dans l'une au moins des tranches traitées.

Pendant toute la durée de l'ébullition, la température reste constante ; quand presque toute la phase liquide a été évaporée sous vide, la température commence à s'élever. Le procédé comporte la détection du début de cette élévation, puis l'élévation de la température est contrôlée en fonction du résultat souhaité et de la nature du fruit ou du légume traité.

Par exemple, si l'on veut donner aux tranches de pomme une texture croustillante, quand l'ébullition de la phase est terminée et que la température commence à s'élever, cette température est élevée à une valeur de 70 à 75°C et tenue à cette valeur pendant une durée de 30 minutes environ.

Avec certains fruits plus fragiles, comme les fraises et les framboises, qui sont traitées à l'état entier, la température est tenue à une valeur maximale de 45°C et 50°C respectivement, pendant un temps minimum de 8 heures, de préférence de 10 heures, ce qui donne un produit final sec et croquant sous la dent.

Avec le procédé de l'invention, l'arôme naturel du fruit ou du légume traité est conservé, ainsi que sa couleur naturelle, sans aucun brunissement. Les tranches ne sont pas déformées, ni gonflées, ni aplaties, leur épaisseur ne change pas.

La valeur de la dépression mentionnée plus haut pourrait être différente, mais à une valeur plus faible de la pression résiduelle correspondraient des coûts plus élevés d'équipement et de fonctionnement. A des valeurs plus fortes de la pression résiduelle, on commencerait à s'exposer au risque de voir se produire le brunissement, ou un début de brunissement des tranches, ou encore un début de déformation des tranches en cours de déshydratation.

On notera qu'on ne parvient pas, en pratique, à une déshydratation absolue ; une telle déshydratation absolue n'est pas nécessaire, ni même souhaitable. En pratique, il subsiste une humidité résiduelle des tranches comprise entre 2 à 5 %, de 3 % en général. Ceci est un autre moyen de constater la bonne exécution de l'opération de déshydratation par ébullition sous vide, à l'aide d'un détecteur d'humidité, comme il en existe dans le commerce, quand une telle valeur résiduelle de l'humidité a été atteinte, les tranches sont devenues croustillantes. Les tranches de fruits ont conservé leur forme, leur volume, leur couleur et leur aspect d'origine - après une éventuelle réhydratation, les tranches peuvent être confondues avec des tranches fraîches.

Lorsqu'elles sont devenues sèches et croustillantes, les tranches sont mises dans des sachets imperméables à l'air et fermés hermétiquement afin d'empêcher toute reprise d'humidité par les tranches. Dans cet état, ces dernières se conservent très longtemps.

Ce résultat est atteint sans aucun brunissement du fruit ou du légume traité et sans aucune adjonction ni d'un agent conservateur quelconque, ni d'anti-oxydant, ni de SO₂, ni d'un corps quelconque contenant du soufre comme les sulfites ou les bisulfites.

Le matériel nécessaire à l'opération de déshydratation se trouve dans le commerce ou se réalise facilement à l'aide d'éléments disponibles dans le commerce. Par exemple, des plateaux en toile à tamis qui ont servi à l'opération de trempage peuvent être posés au-dessus de serpentins à circulation d'un fluide de chauffage, à l'intérieur d'une enceinte pouvant être fermée hermétiquement et raccordée à une source de vide.

L'exemple de traitement décrit ci-dessus peut faire objet de plusieurs variantes.

Par exemple, l'accroissement de la teneur en sucre des tranches obtenues peut se faire autrement que par trempage préalable dans une solution enrichie en hydrate de carbone. On peut prévoir, à la place de ce trempage ou en supplément à ce trempage, une pulvérisation d'une solution de sucre sur la face exposée des tranches, juste à leur sortie de l'enceinte de déshydratation. Une telle pulvérisation est assez faible pour ne pas modifier sensiblement l'humidité résiduelle des tranches avant leur emballage tout en changeant très sensiblement leur saveur sucrée.

Dans le cas où il n'est pas souhaité de modifier la teneur en sucre du fruit traité, il est possible de supprimer l'opération de trempage. Toutefois, il est plus fréquent que l'on désire augmenter la teneur en sucre.

Il est à noter que le procédé de l'invention fournit un produit nouveau en soi qui est remarquable par les caractéristiques suivantes :
- il a une texture "sèche" et croustillante, avec une porosité analogue à celle d'un produit expansé alors que précisément, comme on l'a dit plus haut, ses dimensions n'ont pas changé par rapport à celles de son état initial,
- il a conservé sa couleur d'origine,
- il est exempt de SO₂,
- il est exempt d'huile de friture.

Par ailleurs, il a une saveur plus ou moins prononcée selon qu'il a été décidé de l'enrichir ou de l'appauvrir en sucre, comme on l'a expliqué plus haut.

## Revendications

1. Procédé pour la préparation de fruits ou de légumes entiers, ou en morceaux, ou en tranches, à une teneur résiduelle en humidité comprise entre 2 et 5 % en poids par rapport au poids total, après nettoyage, épluchage et découpage de ces fruits ou légumes, caractérisé en ce qu'on soumet les fruits ou légumes, sans addition aucune d'un agent quelconque de protection contre le brunissement, à un traitement préliminaire éventuel d'augmentation ou de diminution de leur teneur en sucre, qu'on les soumet ensuite à une opération de déshydratation dans une enceinte maintenue sous vide à une pression résiduelle de 5 cm Hg (6,666 Pa) et portée à une température de 35°C provoquant l'ébullition de la phase liquide des fruits ou légumes traités, le déroulement de cette opération étant contrôlé par la régulation de la température de chauffage et l'opération étant poursuivie jusqu'à la teneur résiduelle en humidité désirée, après quoi le produit traité est introduit dans des sachets imperméables à l'air et à l'eau qui sont ensuite fermés hermétiquement.

2. Procédé selon la revendication 1, caractérisé en ce que le traitement préliminaire de modification de la teneur en sucre des fruits ou légumes est effectué par trempage pendant une durée de 15 à 40 minutes dans un bain de modification de la teneur en sucre qui est chauffé à une température de 30° à 50°C

3. Procédé selon les revendications 1 et 2, caractérisé en ce que le bain de modification de la teneur en sucre est constitué par une solution aqueuse d'hydrate de carbone d'une concentration supérieure à celle des fruits ou légumes traités.

4. Procédé selon les revendication 1 à 3, caractérisé en ce que le bain de modification de la teneur en sucre est constitué par un jus de fruit concentré.

5. Procédé selon la revendication 1, caractérisé en en ce que le bain de modification de la teneur en sucre est constitué par de l'eau pure.

6. Procédé selon la revendication 1, caractérisé en ce que pendant l'exécution de l'opération de déshydratation, on laisse la température s'élever à 35°C et contrôle cette température pour détecteur le début de son élévation.

7. Procédé selon les revendications 1 et 6, caractérisé en ce que, après l'échèvement de l'opération de déshydratation, on laisse la température s'élever à 70°C, en règle générale à une valeur maximale de 45°C pour les fraises, de 50°C pour les framboises, pendant 8 heures au minimum.

8. Procédé selon la revendication 1, caractérisé en ce que les fruits ou légumes traités sont découpés en tranches d'une épaisseur de 1 à 10 mm.

## Claims

1. Process for the preparation of fruits or vegetables, whole, in pieces or in slices, to a residual moisture content of between 2 and 5% by weight relative to the total weight, after cleaning, peeling and cutting of these fruits or vegetables, characterised in that the fruits or vegetables are subjected, without the addition of any agent for protection against browning, to a possible preliminary treatment to increase or reduce their sugar content, that they are then subjected to a dehydration operation in a chamber kept under vacuum at a residual pressure of 5 cm Hg (6.666 Pa) and brought to a temperature of 35°C to bring about the boiling of the liquid phase of the treated fruits or vegetables, the progress of this operation being monitored by regulating the heating temperature and the operation being continued to the desired residual moisture content, after which the treated product is introduced into air- and water-tight bags which are then hermetically sealed.

2. Process according to claim 1, characterised in that the preliminary treatment for modifying the sugar content of the fruits or vegetables is carried out by soaking for a period of 15 to 40 minutes in a bath for modifying the sugar content which is heated to a temperature of 30 to 50°C.

3. Process according to claims 1 and 2, characterised in that the bath for modifying the sugar content consists of an aqueous solution of carbohydrate having a concentration higher than that of the treated fruits or vegetables.

4. Process according to claims 1 to 3, characterised in that the bath for modifying the sugar content consists of a concentrated fruit juice.

5. Process according to claim 1, characterised in that the bath for modifying the sugar content consists of pure water.

6. Process according to claim 1, characterised in that, during the execution of the dehydration operation, the temperature is allowed to rise to 35°C and this temperature is monitored to detect the beginning of its rise.

7. Process according to claims 1 and 6, characterised in that, after completion of the dehydration operation, the temperature is allowed to rise to 70°C, generally speaking to a maximum value of 45°C in the case of strawberries, 50°C in the case of raspberries for a minimum of 8 hours.

8. Process according to claim 1, characterised in that the treated fruits or vegetables are cut into slices having a thickness of 1 to 10 mm.

## Patentansprüche

1. Verfahren zum zubereiten von Obst oder Gemüse ganz, in Stücken oder in Scheiben auf einen Restfeuchtigkeitsgehalt zwischen 2 und 5 Gew.-%, bezogen auf das Gesamtgewicht nach dem Putzen, Schälen und Schneiden des Obstes oder Gemüses, dadurch gekennzeichnet, daß man das Obst oder Gemüse ohne Zugabe irgendeines Mittels zum Schutz gegen ein Braunwerden einer Vorbehandlung zum Erhöhen oder ggfs. Herabsetzen des Zuckergehaltes unterwirft, das Obst oder Gemüse anschließend einer Entwässerung in einer Umgebung unterwirft, die unter Vakuum auf einem Restdruck von 5 cm Hg (6,666 Pa) gehalten und auf eine Temperatur von 35°C erwärmt wird, so daß ein Sieden der flüssigen Phase des Obstes oder Gemüses bewirkt wird, wobei der Ablauf dieses Arbeitsvorganges dadurch gesteuert wird, daß die Erwärmungstemperatur reguliert wird, und der Arbeitsvorgang bis zum gewünschten Restfeuchtigkeitsgehalt fortgesetzt wird, woraufhin das behandelte Produkt in luft- und wasserundurchlässige Beutel gegeben wird, die vollständig hermetisch dicht verschlossen werden.

2. Verfahren nach Anspruch 1, dadurch gekennzeichnet, daß die Vorbehandlung zum Ändern des Zuckergehaltes des Obstes oder Gemüses durch ein Eintauchen über eine Zeitdauer von 15 bis 40 Minuten in ein Bad zum Ändern des Zuckergehaltes erfolgt, das auf eine Temperatur von 30 bis 50°C erwärmt ist.

3. Verfahren nach Anspruch 1 oder 2, dadurch gekennzeichnet, daß das Bad zum Ändern des Zuckergehaltes aus einer wässrigen Kohlehydratlösung mit einer Konzentration über der des behandelten Obstes oder Gemüses besteht.

4. Verfahren nach Anspruch 1 bis 3, dadurch gekennzeichnet, daß das Bad zum Ändern des Zuckergehaltes aus konzentriertem Fruchtsaft besteht.

5. Verfahren nach Anspruch 1, dadurch gekennzeichnet, daß das Bad zum Ändern des Zuckergehaltes aus reinem Wasser besteht.

6. Verfahren nach Anspruch 1, dadurch gekennzeichnet, daß man während der Ausführung des Arbeitsvorganges der Entwässerung die Temperatur auf 35°C ansteigen läßt und diese Temperatur mit einem Temperaturanstiegsdetektor regelt.

7. Verfahren nach Anspruch 1 und 6, dadurch gekennzeichnet, daß man nach dem Trocknen durch die Entwässerung die Temperatur auf 70°C ansteigen läßt und während wenigstens 8 Stunden auf im wesentlichen einen maximalen Wert von 45°C für Erdbeeren und auf 50°C für Himbeeren regelt.

8. Verfahren nach Anspruch 1, dadurch gekennzeichnet, daß das zu behandelnde Obst oder Gemüse in Scheiben mit einer Dicke von 1 bis 10 mm geschnitten wird.
